# EUROPÄISCHE PATENTSCHRIFT

(11) **EP 0 985 090 B1**
(45) Veröffentlichungstag und Bekanntmachung des Hinweises auf die Patenterteilung: **09.10.2002**
(21) Anmeldenummer: 98930758.2
(22) Anmeldetag: 29.05.1998
(51) Int. Cl.: F02F 11/00, F02B 77/00, F01M 11/00, F16C 27/06

(54) **GEHÄUSEDICHTUNG**
CASE SEAL
JOINT DE CARTER

(30) Priorität: 30.05.1997 DE 19722629
(43) Veröffentlichungstag der Anmeldung: 15.03.2000
(73) Patentinhaber: Dolmar GmbH, 22045 Hamburg (DE)
(72) Erfinder: VICK, Christian, D-21423 Winsen (DE); SELLMANN, Dieter, D-22159 Hamburg (DE)
(74) Vertreter: Siewers, Gescha, Dr.
(86) Internationale Anmeldenummer: EP9803208
(87) Internationale Veröffentlichungsnummer: WO98054457

(56) Entgegenhaltungen:
- DE-A- 4 311 257
- US-A- 2 945 715
- US-A- 4 362 341
- US-A- 4 394 853
- US-A- 4 974 973

## Beschreibung

Die Erfindung betrifft eine Dichtungsanordnung mit einer Gehäusedichtung für quergeteilte Kurbelgehäuse, mit einem Kurbelgehäuse, das aus einem Kurbelgehäuseoberteil und einer Kurbelgehäuseunterschale besteht und einer Welle mit einem Kurbelwellenlager, wobei das Kurbelgehäuseoberteil und die Kurbelgehäuseunterschale über Lagersitze für das Kurbelwellenlager der Welle verfügen.

Viele Motoren weisen quergeteilte Kurbelgehäuse auf. Insbesondere bei kleinen Zweitaktmotoren, wie sie für motorgetriebene Handarbeitsgeräte eingesetzt werden, sind quergeteilte Kurbelgehäuse häufig anzutreffen.

Solche Kurbelgehäuse verfügen über ein dem Zylinder zugeordnetes Kurbelgehäuseoberteil und eine Kurbelgehäuseunterschale. Zur Montage werden Kolben, Pleuel und Kurbelwelle mit Lagern und Wellendichtungen in das Kurbelgehäuseoberteil eingesetzt und das Kurbelgehäuse hinterher mit der Kurbelgehäuseunterschale geschlossen.

Beide Kurbelgehäusehälften verfügen über Lagersitze, in die die Lager der Kurbelwelle eingesetzt werden. Bei kleinen Zweitaktmotoren werden meist Kugellager verwendet, die sicher in den Lagersitzen gehalten werden müssen. Es muß sichergestellt werden, daß die Lager sich im Lagersitz nicht verdrehen können und lagegenau zur Zylinderlaufbahn in der dem Zylinder zugeordneten Kurbelgehäusehälfte angeordnet sind.

Außerdem muß die zwischen den beiden Gehäusehälften liegende Trennfuge abgedichtet werden. Insbesondere bei Zweitaktmotoren ist die Abdichtung wichtig, damit die zum Ladungswechsel nötigen Kurbelgehäusedrücke gewährleistet werden können. Bei der Montage der Kurbelgehäuseunterschale ist also gleichzeitig zu beachten, daß die Lager mit der erforderlichen Kraft gehalten werden, ohne zu fest eingespannt zu sein, daß die Lager richtig positioniert sind, und daß gleichzeitig die an der Kurbelgehäusetrennfuge erforderliche Dichtwirkung erzielt wird.

Zur Abdichtung der Kurbelgehäusetrennfuge wird meist Flüssigdichtmasse verwendet. Die Lagersitze müssen bei geschlossenem Kurbelgehäuse eine definierte Kraft zur Fixierung auf die Lager ausüben, wobei gleichzeitig die Kurbelgehäusetrennfuge so genau geschlossen werden muß, daß mit der Flüssigdichtmasse eine ausreichende Dichtwirkung erzielt wird. Alternativ zur Flüssigdichtmasse kann auch eine dünne Papierdichtung verwendet werden. Das Maß der Dichtung muß aber so auf das Maß der Trennfuge abgestimmt werden, daß die Lager ausreichend fixiert werden.

Genau aufeinander abgestimmte Bauteile und Flächen sowie sorgfältige Montage sind Voraussetzung für das störungsfreie Arbeiten des Motors. Insbesondere treten bei der herkömmlichen Lösung häufig Undichtigkeiten im Übergangsbereich zwischen dem Gehäusespalt und den Lagersitzen auf. Darüber hinaus führen auch Lageungenauigkeiten der Lagersitze zu Schäden an der Kurbelwelle. Häufig treten auch Lagerschäden durch Verspannen der Lager beim Verschrauben des Kurbelgehäuses infolge ungenauer Lagersitze auf.

In der DE-A-43 11 257 ist eine Gehäusedichtung für quergeteilte Kurbelgehäuse mit Lagersitzen für Kurbelwellenlager beschrieben. DE-A-43 11 257 zeigt eine Gehäusedichtung für quergeteilte Kurbelgehäuse mit einem Kurbelgehäuseoberteil und einer Kurbelgehäuseunterschale. Beide Bauteile sind mit Lagersitzen für die Lager der Kurbelwelle versehen. Zum Abdichten ist eine Gehäusedichtung vorgesehen, die als einteiliges elastisches Formteil ausgebildet ist. Bei der DE-A-43 11 257 sind die Außenringe der verwendeten Kurbelwellenlager mit weiteren Ringen aus thermoplastischem Material versehen. Diese Ringe weisen an ihrer Außenseite umlaufende Nuten auf, in die die Gehäusedichtung eingesetzt wird. Durch die Ringe aus thermoplastischem Material wird eine Verdrehsicherung für die Kurbelwellenlager erreicht.

Als nächstkommender Stand der Technik ist in der US- A-4 434 756 eine Dichtungsanordnung offenbart, deren Gehäusedichtung zweistückig aufgebaut ist und aus hochtemperaturbeständigem Polyesterkunststoff besteht, jedes Teil der Gehäusedichtung weist Buchsen zum Aufschieben auf das zugehörige Ende der Kurbelwelle auf.

Der Erfindung liegt die Aufgabe zugrunde, eine Gehäusedichtung zu schaffen, mit der eine einfachere und Iagestabile Abdichtung zwischen den Kurbelgehäusehälften erreichbar ist, wobei eine schnelle und sichere Montage angestrebt wird.

Erfindungsgemäß wird die Aufgabe mittels einer Dichtungsanordnung mit einer Gehäusedichtung für quergeteilte Kurbelgehäuse gelöst, mit einem Kurbelgehäuse, das aus einem Kurbelgehäuseoberteil und einer Kurbelgehäuseunterschale besteht und einer Welle mit einem Kurbelwellenlager, wobei das Kurbelgehäuseunterteil und die Kurbelgehäuseunterschale über Lagersitze für das Kurbelwellenlager der Welle verfügen und die Gehäusedichtung als ein einstückig elastisches Formteil ausgebildet ist, das aus Gummi besteht und das entlang von Dichtflächen und entlang der Lagersitze auf dem Kurbelgehäuseoberteil oder der Kurbelgehäuseunterschale aufliegt und die Kurbelwellenlager in montiertem Zustand durch die Gehäusedichtung gegen Verdrehen gesichert sind.

Eine solche Gehäusedichtung wird als Formteil gefertigt, das auf die Dichtflächen und die Flächen der Lagersitze einer Kurbelgehäusehälfte aufgelegt wird.

Die Dichtung kann vorzugsweise so ausgeführt sein, daß sie auch entlang der Wellendichtringsitze einer Kurbelwellengehäusehälfte verläuft. Sie dann derart geformt sein, daß sie entweder auf das Kurbelgehäuseunterteil oder auf das Kurbelgehäuseoberteil aufgelegt werden kann.

Die Kurbelwellenlager können dadurch in nicht bearbeitete Lagersitze im Kurbelgehäuse eingesetzt werden. Durch das Gummimaterial werden die Kurbelwellenlager mit definierter Kraft in ihre Lagersitze in der gegenüberliegenden Kurbelgehäusehälfte gepreßt. Das Mitdrehen der Kurbelwellenlager mit der Welle wird verhindert, Fertigungstoleranzen im Bereich der bearbeiteten oder unbearbeiteten Dichtflächen, der Lagersitze und der Wellendichtringe werden durch die Gummidichtung ausgeglichen.

Gleichzeitig wird erreicht, daß entlang der Kurbelgehäusetrennfuge eine sichere Dichtwirkung gewährleistet wird.

Die radiale Abdichtung der Welle erfolgt in herkömmlicher Weise mit einem Wellendichtring. Die Gehäusedichtung übt also im Bereich der Kurbelgehäusetrennfuge Dichtungsfunktion aus, während sie im Bereich der Lagersitze für eine sichere Lagerung der Wellenlager bzw. der Kurbelwelle sorgt.

Verläuft die Dichtung auch entlang der Wellendichtringsitze, so kann sie hier Fertigungstoleranzen ausgleichen und die Dichtwirkung verbessern.

In einer Weiterentwicklung der Erfindung wird die Kurbelgehäusehälfte, auf die die Dichtung aufgelegt werden soll, im Bereich der Kurbelgehäusetrennfuge mit einer Nut versehen, in die das Dichtungsformteil zumindest teilweise eingelegt werden kann. Bei der Befestigung der Kurbelgehäuseunterschale am Kurbelgehäuseoberteil wird die Dichtung in die Nut gequetscht und eine sichere Dichtwirkung gewährleistet.

Eine andere Weiterbildung der Erfindung sieht vor, daß die Lagersitze, die Wellendichtringsitze oder sowohl die Lagersitze als auch die Wellendichtringsitze der zweiten, nicht mit der Dichtung versehenen Kurbelgehäusehälfte zumindest teilweise gummiert sind. Dadurch wird erreicht, daß die Lager zusätzlich gegen Verdrehen gesichert sind, und Fertigungstoleranzen ausgeglichen werden. Die Dichtwirkung der Wellendichtring wird verbessert.

Zur Verbesserung der Lagerung der Kurbelwellenlager in den Lagersitzen und der Dichtung des Kurbelgehäuses kann die Dichtung auch zusätzlich aus einem zweiten Gummiformteil bestehen, das in den Lagersitz und/oder den Wellendichtringsitz der zweiten Kurbelgehäusehälfte oder zusätzlich entlang der Dichtfläche der zweiten Kurbelgehäusehälfte auflegbar ist. Der zweite Dichtungsteil kann in seiner Form auch dem ersten Dichtungsteil entsprechen oder bei entsprechend geformtem Kurbelgehäuse mit dem ersten Teil äußerlich identisch sein. Dies trägt dazu bei, die Herstellungskosten zu senken und Montagefehler zu vermeiden.

Die Kurbelwellenlager werden dann vollständig von Gummimaterial umschlossen, das sie durch definierten Druck in den Lagersitzen fixiert, positioniert und vor Verdrehen schützt sowie Toleranzen ausgleicht.

Der zweite Teil der Dichtung kann einstückig mit dem ersten Teil verbunden sein.

Vorteil der erfindungsgemäßen Gehäusedichtung ist, daß eine aufwendige Bearbeitung der Lagersitze in den Kurbelgehäusehälften entfallen kann. Die Fertigungstoleranzen werden durch die Gummiformteile ausgeglichen. Durch vorgegebene, definierte Abstände zwischen den Kurbelgehäusehälften wird die Dichtung um ein definiertes Maß gequetscht, und die Kurbelwellenlager werden gleichzeitig durch eine definierte Vorspannung in den Lagerstellen festgehalten.

Außerdem ist die Verwendung von Flüssigdichtmasse nicht mehr notwendig. Es wird eine rationelle, kostensparende, saubere Fertigung ermöglicht. Die Dichtung kann einteilig vorgefertigt werden. Montagefehler und Ungenauigkeiten, die später zu einer Undichtigkeit des Motors führen, sind ausgeschlossen.

Ein Ausführungsbeispiel der Erfindung wird im folgenden anhand der beigefügten Abbildungen näher erläutert:
- **Fig. 1**: zeigt schematisch das Kurbelgehäuse eines Motors mit einer Ausführungsform einer erfindungsgemäßen Dichtung;
- **Fig. 2**: zeigt ebenfalls schematisch eine andere Ausführungsform der Dichtung;
- **Fig. 3**: zeigt eine dritte Ausführungsform der erfindungsgemäßen Dichtung.

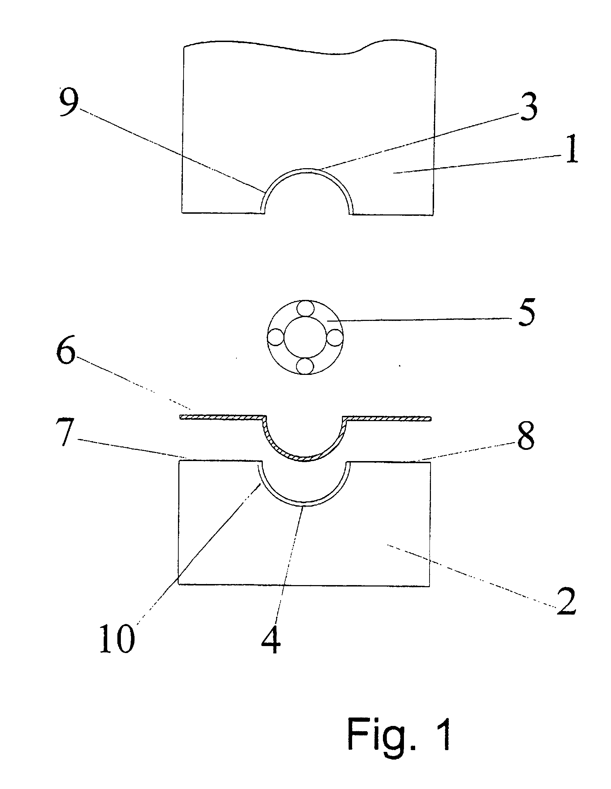

In **Figur 1** ist schematisch ein Motor dargestellt, dessen Kurbelgehäuse aus einem Kurbelgehäuseoberteil 1 und einer Kurbelgehäuseunterschale 2 besteht. Sowohl im Kurbelgehäuseoberteil, als auch in der Kurbelgehäuseunterschale 2, sind Sitze 3, 4 für das Kurbelwellenlager 5 sowie Wellendichtringsitze 9, 10 für den nicht abgebildeten Wellendichtring vorgesehen. Zur Montage wird zunächst der nicht dargestellte Kolben mit dem nicht dargestellten Pleuel im Zylinder des Kurbelgehäuseoberteils 1 montiert und die ebenfalls nicht dargestellte Kurbelwelle mit ihrem Lager 5 und dem Wellendichtring in den nicht bearbeiteten Lagersitz 3 im Kurbelgehäuseoberteil 1 eingesetzt. Danach wird ein Gummiformteil 6 auf die Kurbelgehäuseunterschale 2 aufgelegt. Das Gummiformteil verläuft entlang der Dichtflächen 7, 8 des Kurbelgehäusetrennfuge sowie entlang des Lagersitzes 4 und des Wellendichtringsitzes 10 in der Kurbelgehäuseunterschale 2. Die Kurbelgehäuseunterschale 2 wird dann mit dem Kurbelgehäuseoberteil 1 verschraubt. Das Gummiformteil 6 wird leicht gequetscht. Dabei wird das Kurbelwellenlager 5 definiert gegen den Kurbelwellenlagersitz 3 im Kurbelgehäuseoberteil 1 gepreßt. Das Kurbelwellenlager 5 ist durch das Gummiformteil 6 gegen Verdrehen gesichert. In den Bereichen 7 und 8 entlang der Dichtflächen der Kurbelgehäusetrennfuge wird durch die Quetschung des Gummiformteils eine sichere Abdichtung des Gehäuses erreicht. Die Dichtwirkung wird zusätzlich dadurch verbessert, daß entlang der Dichtflächen 7, 8 eine umlaufende Nut in der Kurbelgehäuseunterschale 2 vorgesehen ist.

Die radiale Dichtung der Kurbelwelle erfolgt durch einen herkömmlichen Wellendichtring, der vor dem Kurbelwellenlager in einen Sitz 9, 10 eingepreßt wird. Die Dichtwirkung des Wellendichtrings wird dadurch verbessert, daß die Gehäusedichtung auch entlang dem Wellendichtringsitz 10 in der Kurbelgehäuseunterschale 2 verläuft. Dadurch werden Fertigungstoleranzen ausgeglichen und der Wellendichtring wird sicher in seiner Position gehalten.

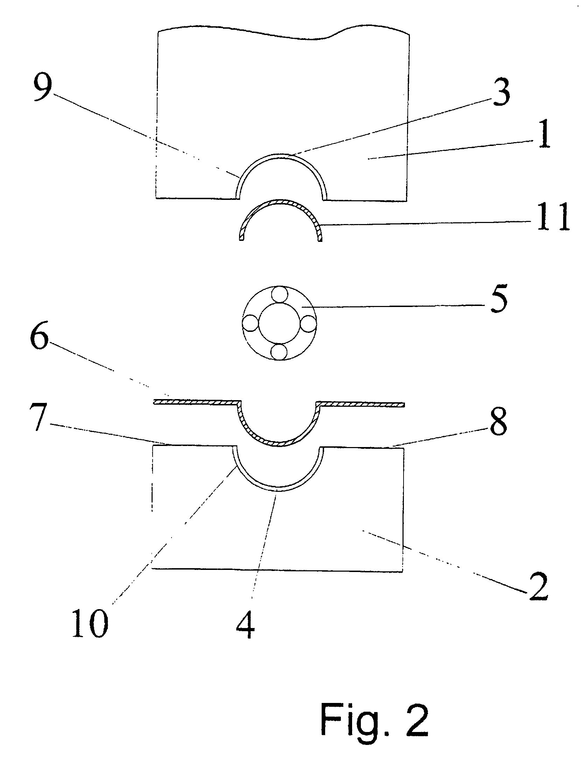

In **Figur 2** ist eine Ausführungsform der erfindungsgemäßen Gehäusedichtung schematisch dargestellt, bei der ein zweites Formteil 11 in den Lagersitz 3 und den Wellendichtringsitz 9 des Kurbelgehäuseoberteils 1 einlegbar ist. Das Kurbelwellenlager 5 und der Wellendichtring sind dadurch außen vollständig von elastischem Dichtungsmaterial umgeben, wodurch die oben beschriebenen positiven Auswirkungen noch verbessert werden können.

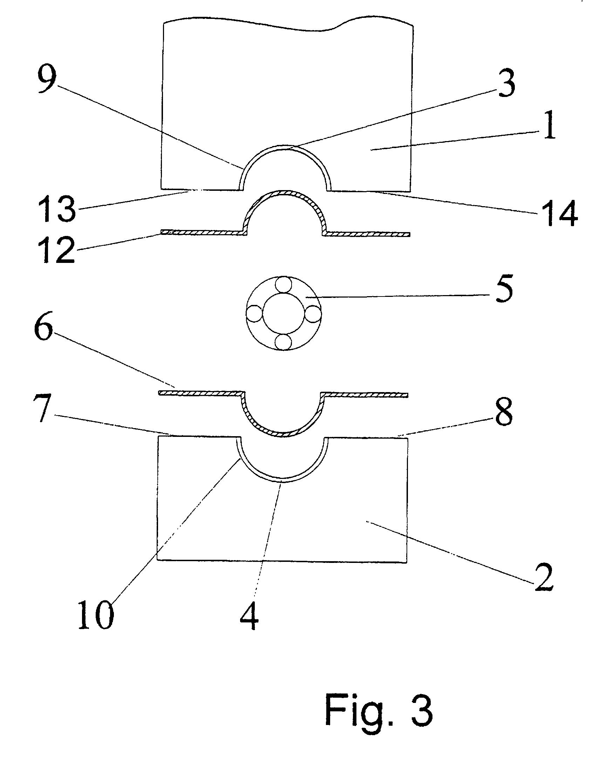

In **Figur 3** ist eine Ausführungsform der Gehäusedichtung abgebildet, bei der das zweite Dichtungsteil 12 mit dem ersten 6 übereinstimmt. Das Kurbelgehäuse des dargestellten Motors ist derart geformt, daß ein Dichtungsformteil 6, 12 sowohl auf das Kurbelgehäuseoberteil 1 als auch auf die Kurbelgehäuseunterschale 2 aufgelegt werden kann. Montagefehier wegen falsch zugeordneter Dichtungsteile sind damit ausgeschlossen. Die Ausgleichsmöglichkeit für Fertigungstoleranzen oder Oberflächenfehler durch nicht bearbeitete Dicht- und Lagerflächen sind durch die doppelte Dichtungslage im Bereich der Dichtflächen 7, 13, 8, 14 noch verbessert.

## Patentansprüche

1. Dichtungsanordnung mit einer
- Gehäusedichtung (6) für quergeteilte Kurbelgehäuse,
- mit einem Kurbelgehäuse, das aus einem Kurbelgehäuseoberteil (1) und einer Kurbelgehäuseunterschale (2) besteht und
- einer Welle mit einem
- Kurbelwellenlager (5),
- wobei das Kurbelgehäuseoberteil (1) und die Kurbelgehäuseunterschale (2) über Lagersitze (3, 4) für das Kurbelwellenlager (5) der Welle verfügen, **dadurch gekennzeichnet, daß**
- die Gehäusedichtung (6) als einstückiges Gummiformteil ausgebildet ist, das
- entlang von Dichtflächen (7, 8) und entlang der Lagersitze (3, 4) auf dem Kurbelgehäuseoberteil (1) oder der Kurbelgehäuseunterschale (2) aufliegt
- und die Kurbelwellenlager (5) in montiertem Zustand durch die Gehäusedichtung (6) gegen Verdrehen gesichert sind.

2. Dichtungsanordnung nach Anspruch 1, **dadurch gekennzeichnet, daß** das Kurbelgehäuse Wellendichtringsitze (9,10) aufweist und **daß** die Gehäusedichtung (6) zusätzlich entlang der Wellendichtringsitze (9,10) aufliegt.

3. Dichtungsanordnung nach einem der Ansprüche 1 bis 2, **dadurch gekennzeichnet, daß** die Gehäusedichtung (6) zumindest teilweise in eine Nut entlang der Dichtfläche (7,8) und/oder der Lagersitze (3,4) und/oder der Wellendichtringsitze (9,10) einer oder beider Kurbelgehäusehälften (1,2) eingelegt ist.

4. Dichtungsanordnung nach einem der Ansprüche 1 bis 3, **dadurch gekennzeichnet, daß** der Lagersitz (3,4) und/oder der Wellendichtringsitz (9,10) der zweiten, nicht mit der Dichtung versehenen Kurbelgehäusehälfte (1,2) zumindest teilweise gummiert ist.

5. Dichtungsanordnung nach einem der Ansprüche 1 bis 4, **dadurch gekennzeichnet, daß** die Gehäusedichtung (6) ein zweites Gummiformteil (11) umfaßt, das in den Lagersitz (3) und/oder den Wellendichtringsitz (9) der zweiten, nicht mit dem ersten Dichtungsteil (6) versehenen Kurbelgehäusehälfte (1) eingelegt ist.

6. Dichtungsanordnung nach einem der Ansprüche 1 bis 4, **dadurch gekennzeichnet, daß** die Gehäusedichtung (6) zusätzlich aus einem zweiten Gummiformteil (12) besteht, das entsprechend dem ersten geformt ist und entsprechend auf die zweite Kurbelgehäusehälfte (1) aufgelegt ist.

7. Dichtungsansordnung nach einem der Ansprüche 5 oder 7, **dadurch gekennzeichnet, daß** das zweite elastische Formteil (11,12) zumindest teilweise in eine Nut entlang der Dichtflächen (7,8,13,14) und/oder des Lagersitzes (3,4) und/oder der Wellendichtringsitze (9,10) der zweiten Kurbelgehäusehälfte (1,2) eingelegt ist.

8. Dichtungsanordnung nach einem der Ansprüche 5 bis 7, **dadurch gekennzeichnet, daß** das zweite Gummiformteil einstückig mit dem ersten Gummiformteil (6) verbunden ist.

9. Dichtungsanordnung nach einem der Ansprüche 1 bis 8, **dadurch gekennzeichnet, daß** die Gehäusedichtung (6) mittels Einlegens in die Nut und/oder in an sich bekannter Weise derart mit dem Kurbelgehäuse (1,2) verbunden ist, daß die Verbindung zumindest teilweise fest ist.

10. Dichtungsanordnung nach Anspruch 9, **dadurch gekennzeichnet, daß** die Gehäusedichtung (6) zumindest teilweise auf das Kurbelgehäuse (1,2) aufvulkanisiert ist.

## Claims

1. A sealing arrangement having a
- case seal (6) for cross-divided crankcases,
- having a crankcase composed of a crankcase top half (1) and a crankcase bottom shell (2) and
- having a shaft having a
- crankshaft bearing (5),
- wherein the crankcase top half (1) and the crankcase bottom shell (2) have bearing seats (3, 4) for the crankshaft bearing (5) of the shaft, **characterised in that**
- the case seal (6) is in the form of a one-piece moulded rubber part which
- along sealing surfaces (7, 8) and along the bearing seats (3, 4) rests on the crankcase top half (1) or the crankcase bottom shell (2)
- and the case seal (6) secures the crankshaft bearings (5) against rotation when they are in the mounted state.

2. A sealing arrangement according to Claim 1, **characterised in that** the crankcase has shaft sealing ring seats (9, 10), and **in that** the case seal (6) is additionally supported along the shaft sealing ring seats (9, 10).

3. A sealing arrangement according to either one of Claims 1 to 2, **characterised in that** at least part of the case seal (6) is placed in a groove along the sealing surface (7, 8) and/or the bearing seats (3, 4) and/or the shaft sealing ring seats (9, 10) of one or both crankcase halves (1, 2).

4. A sealing arrangement according to any one of Claims 1 to 3, **characterised in that** the bearing seat (3, 4) and/or the shaft sealing ring seat (9, 10) of the second crankcase half (1, 2) not provided with the seal is at least partially rubberised.

5. A sealing arrangement according to any one of Claims 1 to 4, **characterised in that** the case seal (6) comprises a second moulded rubber part (11) placed in the bearing seat (3) and/or the shaft sealing ring seat (9) of the second crankcase half (1) not provided with the first sealing element (6).

6. A sealing arrangement according to any one of Claims 1 to 4, **characterised in that** the case seal (6) is additionally composed of a second moulded rubber part (12) which is shaped to correspond to the first moulded rubber part and which correspondingly is placed on the second crankcase half (1).

7. A sealing arrangement according to either one of Claims 5 or 7, **characterised in that** at least part of the second resilient moulded part (11, 12) is placed in a groove along the sealing surfaces (7, 8, 13, 14) and/or the bearing seat (3, 4) and/or the shaft sealing ring seats (9, 10) of the second crankcase half (1, 2).

8. A sealing arrangement according to any one of Claims 5 to 7, **characterised in that** the second moulded rubber part is integrally connected to the first moulded rubber part (6).

9. A sealing arrangement according to any one of Claims 1 to 8, **characterised in that** the case seal (6) is connected to the crankcase (1, 2), by means of being placed in the groove and/or in a manner known per se, in such a manner that the connection is at least partially fixed.

10. A sealing arrangement according to Claim 9, **characterised in that** at least part of the case seal (6) is vulcanised onto the crankcase (1, 2).

## Revendications

1. Système d'étanchéité comprenant :
■ un joint de carter (6) pour carter de vilebrequin divisé transversalement,
■ un carter de vilebrequin qui comporte une partie supérieure (1) de carter et une partie inférieure (2) de carter et
■ un vilebrequin avec
■ un palier de vilebrequin (5)
■ la partie supérieure (1) et la partie inférieure (2) de carter étant pourvues de logements de palier (3, 4) pour le palier de vilebrequin (5), **caractérisé en ce que**
■ le joint de carter (6) est conformé en élément moulé en caoutchouc monobloc, qui repose le long de surfaces d'étanchéité (7, 8) et le long des logements de palier (3, 4) sur la partie supérieure (1) de carter ou la partie inférieure (2) de carter,
■ et les paliers de vilebrequin (5), en position montée sont immobilisés en rotation par le joint de carter (6).

2. Système d'étanchéité selon la revendication 1, **caractérisé en ce que** le carter de vilebrequin comporte des logements de joint de vilebrequin (9, 10) et **en ce que** le joint de carter (6) repose en plus le long des logements de joint de vilebrequin (9, 10).

3. Système d'étanchéité selon une des revendications 1 à 2, **caractérisé en ce que** le joint de carter (6) est au moins partiellement inséré dans une rainure le long de la surface d'étanchéité (7, 8) et/ou des logements de palier (3, 4) et/ou des logements de joint de vilebrequin (9, 10) de l'une des ou des deux moitiés de carter de vilebrequin (1,2).

4. Système d'étanchéité selon une des revendications 1 à 3, **caractérisé en ce que** le logement de palier (3, 4) et/ou le logement de joint de vilebrequin (9, 10) de la deuxième moitié de carter de vilebrequin (1,2) non équipée du joint est au moins partiellement revêtue de caoutchouc.

5. Système d'étanchéité selon une des revendications 1 à 4, **caractérisé en ce que** le joint de carter (6) comporte un second élément moulé en caoutchouc (11) qui est inséré dans le logement de palier (3) et/ou le logement de joint de vilebrequin (9) de la deuxième moitié de carter de vilebrequin (1) ne comportant pas le premier élément de joint (6) moulé.

6. Système d'étanchéité selon une des revendications 1 à 4, **caractérisé en ce que** le joint de carter (6) comprend en outre un second élément moulé en caoutchouc (12) qui est conformé de manière similaire au premier élément (6) et est monté de manière analogue sur la deuxième moitié de carter de vilebrequin (1).

7. Système d'étanchéité selon une des revendications 5 ou 6, **caractérisé en ce que** le second élément moulé en caoutchouc (11, 12) est au moins partiellement inséré dans une rainure le long des surfaces d'étanchéité (7, 8, 13, 14) et/ou du logement de palier (3, 4) et ou des logements de joint de vilebrequin (9, 10) de la deuxième moitié de carter de vilebrequin (1, 2).

8. Système d'étanchéité selon une des revendications 5 à 7, **caractérisé en ce que** le second élément moulé en caoutchouc est lié d'une pièce au premier élément moulé (6) en caoutchouc.

9. Système d'étanchéité selon une des revendications 1 à 8, **caractérisé en ce que** le joint de carter (6) est lié par insertion dans la rainure et/ou de manière connue en soi au carter de vilebrequin (1, 2) de telle sorte que la liaison soit au moins partiellement fixe.

10. Système d'étanchéité selon la revendication 9, **caractérisé en ce que** le joint de carter (6) est au moins partiellement vulcanisé sur le carter de vilebrequin (1, 2).
